# NEW EUROPEAN PATENT SPECIFICATION

(11) **EP 2 246 467 B2**
(45) Date of publication and mention of the opposition decision: **31.05.2017**
(45) Mention of the grant of the patent: 20.06.2012
(21) Application number: 09425163.4
(22) Date of filing: 28.04.2009
(51) Int. Cl.: D04H 13/00, B32B 5/24, B32B 5/26, B32B 5/28, B32B 27/32, E04F 15/22, E04B 5/02, B32B 3/30, D04H 1/66, D04H 1/74

(54) **Sheath for the installation of flooring**
Hülle zum Verlegen von Fußbodenbelag
Gaine pour l'installation de plancher

(43) Date of publication of application: 03.11.2010
(73) Proprietor: Kerakoll S.p.A., 41049 Sassuolo (MO) (IT)
(72) Inventor: Sghedoni, Gianluca, 41049 Sassuolo (Modena) (IT)
(74) Representative: Firmati, Leonardo

(56) References cited:
- WO-A1-99/54571
- WO-A1-2009/072899
- DE-U1- 20 209 869
- DE-U1- 20 210 177
- DE-U1- 20 307 289
- DE-U1-202005 004 127
- US-A- 3 652 353
- US-A- 3 652 353
- US-A1- 2002 028 318
- US-A1- 2002 028 318
- US-A1- 2006 070 326
- US-A1- 2006 070 326

## Description

This invention relates to a sheath for the installation of flooring.

Prior art sheaths are known for the installation of flooring that are placed between a rigid base, such as a cement screed or existing flooring, and the new flooring.

A lower face of sheaths of the above-mentioned type is glued on the above-mentioned rigid base and adhesive is spread on the upper face on which the final flooring is installed.

The structure of the sheaths normally provides a lower layer of non-woven fabric, advantageously a polypropylene felt, which guarantees an adequate grip, by means of the adhesive, with the rigid base, and an upper textured layer, advantageously made from polyethylene impermeable to water on which, as mentioned above, the adhesive for holding the overlying flooring is spread.

The lower layer and the upper layer are permanently fixed together by gluing or by thermal binding.

The term textured means, with reference to the sheaths for the installation of flooring, the presence of a plurality of punches in the polyethylene layer, normally with a round shape, that have concavities facing upwards to hold inside a predetermined quantity of adhesive for fixing the flooring.

In the prior art sheaths there is the problem of guaranteeing an adequate grip between the above-mentioned upper polyethylene layer, which is substantially smooth, and the above-mentioned adhesive.

Some manufacturers have opted to form the above-mentioned punches in order to define cavities with a diametrical dovetail cross section, so that once the adhesive has penetrated inside them and solidified, an obstruction prevents the detachment of the adhesive itself from the polyethylene layer.

Other manufacturers have dealt with the same problem by fixing a high-strength mesh to the upper face of the polyethylene layer, made for example from fibreglass, so that once the adhesive has been spread the mesh constitutes a kind of reinforcement for the adhesive.

Although the above-mentioned prior art solutions have faced the problem of the grip with the upper adhesive layer, this problem has not been resolved satisfactorily, and the area of effective grip between the sheath and the adhesive is still too limited in percentage terms with respect to the area of the sheath itself.

In other words, the grip between adhesive and sheath permitted by the prior art sheaths does not guarantee a sufficient tearing resistance for the overlying flooring.

The aim of this invention is to overcome the above-mentioned shortcoming by providing a sheath for the installation of flooring which is able to guarantee an effective and better grip between the sheath and the adhesive placed on it, compared with the prior art sheaths. The technical characteristics of this invention, according to the above-mentioned aim, may be clearly inferred from the content of the appended claims and the advantages of this invention are apparent from the detailed description which follows, with reference to the accompanying drawings, which illustrate a non-limiting embodiment of it provided merely by way of an example, in which:

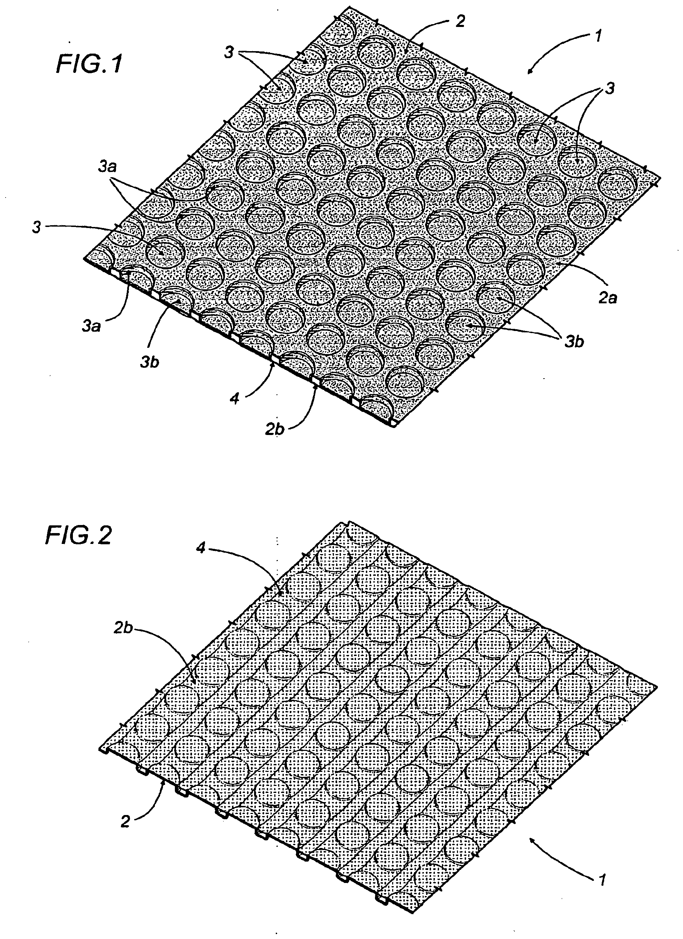

- figure 1 illustrates a schematic perspective view from above of a preferred embodiment of a sheath for the installation of flooring according to this invention;
- figure 2 illustrates a perspective view from below of the sheath of figure 1;

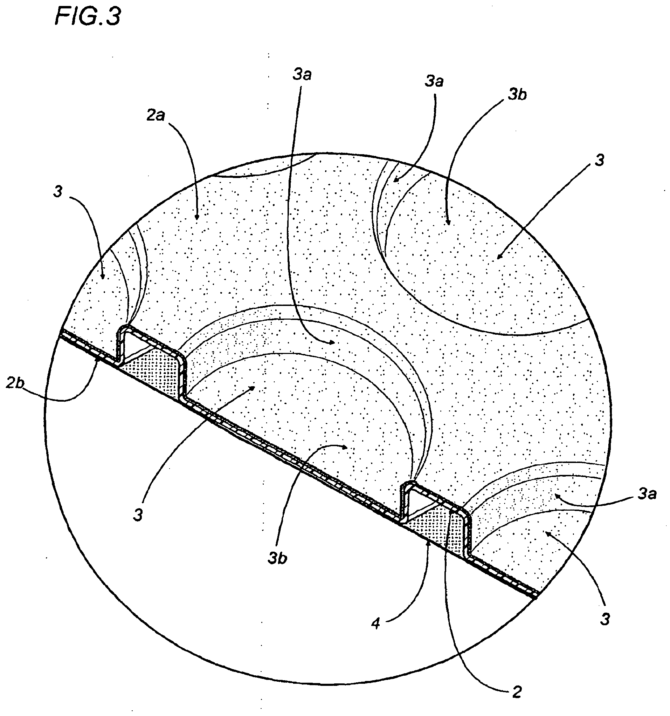

- figure 3 is a scaled-up perspective view from above, of a detail of the sheath of figure 1;
- figure 4 is a microscope image, at a considerably enlarged scale, of the coating of the sheath shown in the previous figures.

With reference to the accompanying drawings, the numeral 1 denotes in its entirety a portion of sheath for installation of flooring manufactured according to this invention.

The sheath 1 for installation of flooring comprises a first layer 2 of sheet material having a plurality of cavities 3. The cavities 3 preferably have a truncated cone shape.

The layer 2 has an upper face 2a characterised by the concavities defined by the above-mentioned cavities 3 (that is, the upper face 2a of the first layer 2 has a plurality of cavities 3 defining corresponding concave surfaces) and a lower face 2b, opposite the upper face 2a and characterised by the convex nature of the cavities 3 (that is, the lower face 2b of the first layer 2 has a plurality of protrusions corresponding to the cavities 3 and defining convex surfaces).

The layer 2 is preferably made from polyethylene. In this way, advantageously the sheath 1 is impermeable.

Each truncated cone cavity 3 has a lateral surface 3a and a base surface 3b which constitutes the minor base of the truncated cone.

Consequently, each cavity 3 is shaped so its large side faces outwards, that is, towards the upper face 2a of the first layer 2.

The sheath 1 comprises a second lower layer 4 made from non-woven fabric, advantageously a polypropylene felt, which guarantees an adequate grip, by means of the adhesive, with a rigid underlying base, such as a screed or an existing flooring.

The second lower layer 4 is permanently connected to the lower face 2b of the first layer 2 by gluing or thermal binding.

According to this invention, a plurality of fibres are distributed, by gluing, on the upper face 2a of the first layer 2, to permit, during use, the grip of the adhesive distributed on the sheath 1 and used for the installation of the overlying flooring.

The fibres coat the layer 2, both in the cavities 3 and in the plane areas lying between one cavity 3 and the ones adjacent to it.

The fibres coat the truncated cone cavities 3 both in their lateral surface 3a and in their base surface 3b.

The length of the fibres distributed on the layer 2 is preferably between 500 and 1000 µm.

It has been experimentally seen that optimum results are achieved with fibres approximately 750 µm in length. Preferably, the above-mentioned fibres are made from polypropylene.

The density of the fibres is between 30 and 80 million fibres per m² of sheath.

It has been experimentally seen that optimum results are achieved with a fibre density of approximately 60 million per m² of sheath.

It should be noted that the fibres are distributed on the upper face 2a of the first layer 2 in a random manner; in this way, these fibres constitute a layer of amorphous fibrous material placed on the upper face 2a of the first layer 2.

Advantageously, this favours the penetration between the fibres of the adhesive used to fix the flooring to the sheath, with consequent better adhesion of the flooring to the sheath.

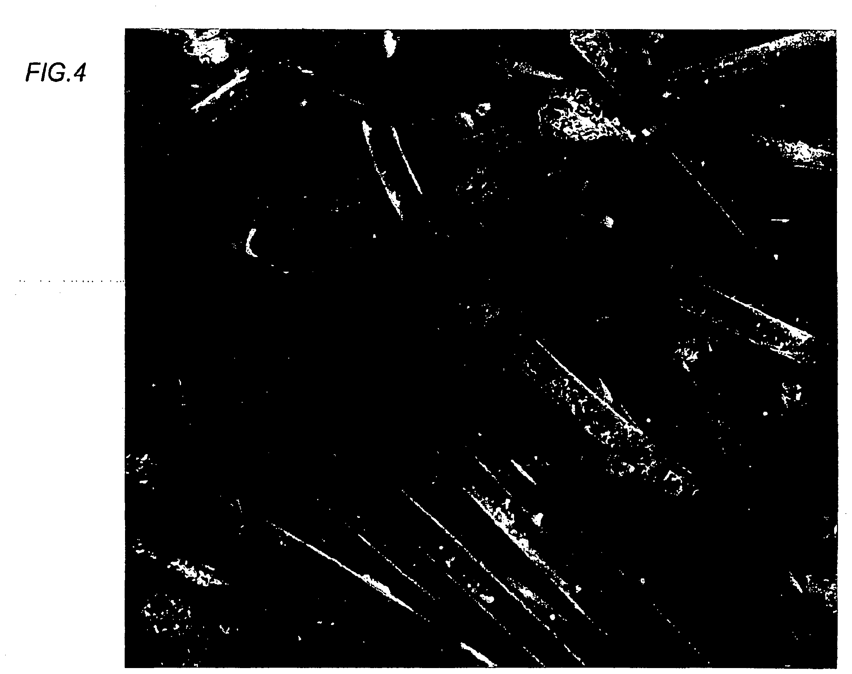

In detail, with reference to figure 4 which illustrates a photo in a considerably enlarged scale of the above-mentioned fibres, taken with a microscope, the adhesive to fix the flooring penetrates into the spaces between one fibre and the next and the fibres therefore constitute a kind of reinforcement for the adhesive itself, thereby fixing it in a particularly effective manner to the layer 2 which the fibres themselves are integral with.

The method of manufacturing the sheath 1 according to this invention comprises the steps described below.

Starting from a mass of material in a plastic state, advantageously like the polyethylene, the first layer 2 is manufactured by means of a type of rolling.

The rollers used for this rolling have a plurality of protrusions or punches shaped to form the cavities 3.

In particular, a roller is used with a plurality of protrusions preferably with a truncated cone shape, in order to generate corresponding recesses in the rolled layer 2, constituting the above-mentioned cavities 3.

A predetermined quantity of adhesive is then distributed on the upper face 2a of the first layer 2 of sheet material; next, a predetermined quantity of fibres is distributed on the upper face 2a spread with adhesive, so that the fibres themselves, thanks to the adhesive, are permanently anchored to the upper face 2a.

The fibres are preferably distributed on the adhesive by spraying.

The second layer 4 is then glued to the second lower face 2b of the first layer 2.

In a preferred embodiment there is a further step of spraying a predetermined quantity of Teflon® on the fibres, so as to prevent the capillary movement of water between the fibres and increase the insulating (waterproofing) capacity of the fibres 1.

Consequently, this invention provides a method for manufacturing a sheath 1 for the installation of flooring. This method comprises the following steps:
- preparing a first layer 2 of sheet material forming on an upper face 2a a plurality of cavities 3 (or recesses) forming corresponding portions of the upper face 2a (preferably concave towards the outside);
- preparing a second layer 4 and permanently connecting it to a lower layer 2b of the first layer 2 opposite to the upper layer 2a.

According to this invention, the method comprises a step of distributing a plurality of fibres on the upper face 2a of the first layer 2 and permanently connecting the fibres to the upper face 2a, to form a fibrous layer applied to the above-mentioned upper face 2a of the first layer 2. Preferably, the fibres are distributed in such a way that they lie randomly on the upper face 2a of the first layer 2, so that this fibrous layer consists of a substantially amorphous material.

Preferably, the fibres are distributed on the entire surface of the upper face 2a of the first layer 2, so that the fibrous layer is a continuous layer.

Advantageously, this invention achieves the pre-set aim of increasing the gripping capacity of the sheath since the fibres, distributed on the entire layer 2, including the cavities 3, define a gripping surface area for the adhesive used for fixing the flooring which is greater than the surface area of the sheath 1 itself.

In particular, the gripping surface area according to this invention (due to the application of the fibres - and therefore the surface area of the fibres themselves - and the presence of the cavities) corresponds to at least 300 to 400%, and even more, of the surface area of the sheath 1.

With reference to figure 4, with the adhesive penetrating between the fibres, and having seen experimentally that there are several ten of fibres per mm², it has been found that the surface area for the gripping of the adhesive is more than 450% of the surface area of the sheath 1.

The invention described herein is susceptible of industrial application and may be modified and adapted in several ways without thereby departing from the scope of the inventive concept. Moreover, all the details of the invention may be substituted by technically equivalent means.

## Claims

1. A sheath for the installation of flooring comprising a layer (2) of sheet material having a plurality of cavities (3) and having an upper face (2a) **characterised by** the concavities defined by the cavities (3) and a lower face (2b) opposite to the upper face (2a), wherein the sheath has a plurality of fibres distributed on the upper face (2a), permanently connected to the face (2a) itself,
**characterised in that** it comprises the fibres in a density of between 30 and 80 million per m².

2. The sheath according to claim 1, **characterised in that** the length of the fibres is between 500 and 1000 µm.

3. The sheath according to claim 1 or 2, where the cavities (3) have a substantially truncated cone shape, **characterised in that** the fibres are also distributed on a lateral surface (3a) and on a base surface(3b) of each truncated cone cavity (3).

4. The sheath according to any of the claims from 1 to 3, **characterised in that** the fibres are made from polypropylene.

5. The sheath according to anyone of the claims 1 to 4, **characterised in that** it comprises the fibres in a density of approximately 60 million per m².

6. The sheath according to claim 1, **characterised in that** it comprises a second layer (4) permanently connected to the lower face (2b) of the first layer (2) of sheet material.

7. The sheath according to any of the claims from 1 to 6, **characterised in that** the fibres are placed in a random manner.

8. A method for manufacturing a sheath according to the previous claims, comprising the steps of:
- distributing a predetermined quantity of adhesive on the upper face (2a) of the layer of sheet material,
- distributing a predetermined quantity of fibres on the adhesive.

9. The method according to claim 8, **characterised in that** the step of distributing the fibres comprises the step of spraying the fibres on the layer (2) of sheet material.

10. The method according to any of the claims 8 or 9, **characterised in that** it comprises a step of spraying a predetermined quantity of Teflon® on the fibres.

## Patentansprüche

1. Hülle zum Verlegen von Fußbodenbelag, umfassend eine Schicht (2) Plattenmaterial, aufweisend eine Vielzahl von Hohlräumen (3) und aufweisend eine obere Fläche (2a), die durch die Konkavitäten, die von den Hohlräumen (3) definiert werden, gekennzeichnet ist, sowie eine untere Fläche (2b) gegenüber der oberen Fläche (2a),
wobei die Hülle eine Vielzahl von Fasern aufweist, die sich auf der oberen Fläche (2a) verteilen, die permanent mit der Fläche (2a) verbunden sind,
**dadurch gekennzeichnet, dass** sie die Fasern in einer Dichte zwischen 30 und 80 Millionen pro m² umfasst.

2. Hülle nach Anspruch 1, **dadurch gekennzeichnet, dass** die Länge der Fasern 500 bis 1000 µm beträgt.

3. Hülle nach Anspruch 1 oder 2, wobei die Hohlräume (3) im Wesentlichen kegelstumpfförmig sind, **dadurch gekennzeichnet, dass** sich die Fasern auch auf einer seitlichen Fläche (3a) und auf einer Basisfläche (3b) eines jeden kegelstumpfförmigen Hohlraums (3) verteilen.

4. Hülle nach einem der Ansprüche 1 bis 3, **dadurch gekennzeichnet, dass** die Fasern aus Polypropylen sind.

5. Hülle nach einem der Ansprüche 1 bis 4, **dadurch gekennzeichnet, dass** sie die Fasern in einer Dichte von ca. 60 Millionen pro m² umfasst.

6. Hülle nach Anspruch 1, **dadurch gekennzeichnet, dass** sie eine zweite Schicht (4) umfasst, die permanent mit der unteren Fläche (2b) der ersten Schicht (2) Plattenmaterial verbunden ist.

7. Hülle nach einem der Ansprüche 1 bis 6, **dadurch gekennzeichnet, dass** die Fasern zufällig angeordnet sind.

8. Verfahren zur Herstellung einer Hülle nach den vorangehenden Ansprüchen, umfassend die folgenden Schritte:
- Verteilen einer festgelegten Menge Klebstoff auf der oberen Fläche (2a) der Schicht Plattenmaterial,
- Verteilen einer festgelegten Menge Fasern auf dem Klebstoff.

9. Verfahren nach Anspruch 8, **dadurch gekennzeichnet, dass** der Schritt des Verteilens der Fasern den Schritt des Aufsprühens der Fasern auf die Schicht (2) Plattenmaterial umfasst.

10. Verfahren nach einem der Ansprüche 8 oder 9, **dadurch gekennzeichnet, dass** es einen Schritt des Aufsprühens einer festgelegten Menge Teflon® auf die Fasern umfasst.

## Revendications

1. Gaine pour l'installation de plancher comprenant une couche (2) de matériau en feuille avec une pluralité de cavités (3) et avec une face supérieure (2a) se distinguant par les concavités formées par les cavités (3) et une face inférieure (2b) en face de la face supérieure (2a),
dans laquelle la gaine présente une pluralité de fibres réparties sur la face supérieure (2a), attachées de façon permanente à la face (2a),
**caractérisée en ce qu'**elle comprend les fibres dans une densité comprise entre 30 et 80 millions par m².

2. Gaine selon la revendication 1, **caractérisée en ce que** la longueur des fibres est comprise entre 500 et 1 000 µm.

3. Gaine selon les revendications 1 ou 2, dans laquelle les cavités (3) présentent essentiellement une forme de cône tronqué, **caractérisée en ce que** les fibres sont également réparties sur une surface latérale (3a) et sur une surface de fond (3b) de chaque cavité en cône tronqué (3).

4. Gaine selon l'une quelconque des revendications 1 à 3, **caractérisée en ce que** les fibres sont fabriquées en polypropylène.

5. Gaine selon l'une quelconque des revendications 1 à 4, **caractérisée en ce qu'**elle comprend les fibres dans une densité d'environ 60 millions par m².

6. Gaine selon la revendication 1, **caractérisée en ce qu'**elle comprend une seconde couche (4), attachée de façon permanente à la face inférieure (2b) de la première couche (2) de matériau en feuille.

7. Gaine selon l'une quelconque des revendications 1 à 6, **caractérisée en ce que** les fibres sont positionnées au hasard.

8. Méthode pour fabriquer une gaine conforme aux revendications précédentes, comprenant les étapes de :
- répartir une quantité prédéterminée d'adhésif sur la face supérieure (2a) de la couche de matériau en feuille,
- répartir une quantité prédéterminée de fibres sur l'adhésif.

9. Méthode selon la revendication 8, **caractérisée en ce que** l'étape de répartition des fibres comprend l'étape de pulvériser les fibres sur la couche (2) de matériau en feuille.

10. Méthode selon l'une quelconque des revendications 8 ou 9, **caractérisée en ce qu'**elle comprend une étape de pulvériser une quantité prédéterminée de Teflon® sur les fibres.
